# EUROPÄISCHE PATENTSCHRIFT

(11) **EP 1 652 710 B1**
(45) Veröffentlichungstag und Bekanntmachung des Hinweises auf die Patenterteilung: **19.08.2009**
(21) Anmeldenummer: 05109023.1
(22) Anmeldetag: 29.09.2005
(51) Int. Cl.: B60J 10/04, B60J 10/00

(54) **Dicht- oder Zierstreifen, insbesondere für Kraftfahrzeuge**
Sealing or trimming strip, particularly for automotive vehicles
Bande d'étanchéité or decorative, en particulier pour véhicules automobile

(30) Priorität: 27.10.2004 DE 102004052237
(43) Veröffentlichungstag der Anmeldung: 03.05.2006
(73) Patentinhaber: Metzeler Automotive Profile Systems GmbH, 88131 Lindau/Bodensee (DE)
(72) Erfinder: Krause, Fritz, 88145, Hergatz (DE); Solf, Bernd, 88069, Tettnang (DE)
(74) Vertreter: Schober, Christoph D.

(56) Entgegenhaltungen:
- EP-A1- 0 482 999
- EP-B1- 0 395 444
- WO-A-98/40234
- DE-A1- 2 018 864
- JP-A- 11 034 757

## Beschreibung

Die Erfindung betrifft einen Dichtstreifen, der für Kraftfahrzeuge Anwendung findet. Der Dichtstreifen ist mit einem Trägerprofil versehen, das aus einem elastisch verformbaren Werkstoff gefertigt ist und einen Endabschnitt aufweist. Zudem ist der Dichtstreifen mit einer Zierleiste versehen, die an dem Trägerprofil befestigt ist und eine Innenfläche und eine Außenfläche aufweist. Eine Endkappe ist an dem Endabschnitt angeordnet und deckt einen zwischen dem Trägerprofil und der Innenfläche vorhandenen Zwischenraum ab.

Ein Dichtstreifen, der beispielsweise eine Fensterscheibe eines Kraftfahrzeugs einfasst, dient zum einen dazu, die Fensterscheibe abzudichten. Zum anderen hat der Dicht- oder Zierstreifen die Funktion, der Einfassung der Fensterscheibe ein in ästhetischer Hinsicht ansprechendes Erscheinungsbild zu verleihen. Zu diesem Zweck weist der Dichtstreifen eine Zierleiste auf, deren einem Betrachter zugewandte Außenfläche in der Regel matt oder glänzend ausgestaltet ist und die an einem Trägerprofil befestigt ist. Das Trägerprofil kann Bestandteil einer Dichtung sein, welche die Fensterscheibe abdichtet, wie es aus der WO 2004/056598 A1 bekannt ist.

Um ein in ästhetischer Hinsicht ansprechendes Erscheinungsbild zu erreichen, ist es ferner bekannt, an einem Endabschnitt des Trägerprofils oder der Zierleiste eine Endkappe anzuordnen, die einen zwischen dem Trägerprofil und der Innenfläche der Zierleiste vorhandenen Zwischenraum abdeckt und auf diese Weise einen formschönen Abschluss bildet. Die üblicherweise aus Kunststoff bestehende Endkappe wird gewöhnlich entweder stoffschlüssig mit dem Trägerprofil verbunden, zum Beispiel mittels Spritzgießen, oder an die Zierleiste gesteckt. Letzteres erfordert eine spezielle Formgebung der Zierleiste, welche die Gestaltungsfreiheit beschränkt. Zudem ist es im letzteren Fall oftmals erforderlich, die Endkappe zusätzlich zu verkleben oder formschlüssig mit der Zierleiste zu verbinden, um eine zuverlässige Befestigung sicherzustellen.

Weiterhin offenbart die gattungsgemäße DE 2 018 864 864 eine Endkappe, die mit einem Ansatz versehen ist, auf dem die Innenfläche einer Zierleiste aufliegt. Die Endkappe weist darüber hinaus eine Nut, die den Rand der Zierleiste aufnimmt, und federnde Klemmmittel, durch welche die Endkappe an einem Flansch befestigbar ist, auf. Die Nut befindet sich in einer geraden Linie mit einer Einlegerille einer Dichtung, die ebenfalls an dem Flansch befestigbar ist. Um die Endkappe zu montieren, ist es erforderlich, zunächst die Dichtung und die Endkappe an dem Flansch zu befestigen und anschließend die Zierleiste in die Nut und die Einlegerille einzusetzen. Die für die Befestigung der Endkappe dienenden Klemmmittel machen es erforderlich, die Endkappe außerhalb des Bereichs der Dichtung an dem Flansch anzuordnen mit der Folge, dass sich ein vergleichsweise hoher Montageaufwand ergibt.

Außerdem wird ein Endstück zum Verschließen des offenen Endes einer Fahrzeugdichtung in der EP 0 395 444 B1 beschrieben. Das Endstück weist einen C-förmigen Klammerabschnitt auf, der dazu dient, eine Dichtung und eine im Querschnitt L-förmige Ablaufrinne miteinander zu verbinden. Zu diesem Zweck weist der Klammerabschnitt einen oberen Schenkel, der an der Oberseite einer Bodenplatte der Ablaufrinne anliegt und einen unteren Schenkel, der an der Unterseite der Dichtung anliegt, auf. Der obere Schenkel ist auf seiner Oberseite mit einer Nut versehen, in die beim Einführen des Klammerabschnitts in einen von der Dichtung gebildeten Hohlraum ein Vorsprung der Dichtung eingreift, um den Klammerabschnitt zu führen. Beidseitig der Nut sind an der Oberseite des oberen Schenkels zudem Nocken angeordnet, die im eingeschobenen Zustand des Klammerabschnitts an der den Vorsprung umgebenden Innenfläche der Dichtung anliegen. Die Nocken dienen dazu, den Reibschluss zwischen dem oberen Schenkel des Klammerabschnitts und der Dichtung zu erhöhen.

Eine Dichtungsanordnung, die dazu dient, eine dichtende Verbindung zwischen relativ vertikalen und horizontalen Flächen zu ermöglichen, wird in der WO 98/40234 A2 beschrieben. Die Dichtungsanordnung findet insbesondere Anwendung für die Abdichtung zwischen einer gekachelten Wand als vertikale Fläche und einer Duschwanne und einer Arbeitsplatte als horizontale Fläche.

Überdies offenbart die JP 11034757 eine Dichtung, die zum Abdichten des Fensterschachts eines Kraftfahrzeugs dient. Die Dichtung ist an ihren Stirnflächen mit einer Endkappe verschlossen, die eine Abdeckplatte und ein Befestigungsteil aufweist. Das Befestigungsteil wird in einen Hohlraum eingeschoben, der durch die im Querschnitt im Wesentlichen U-förmige Dichtung gebildet wird.

Der Erfindung liegt die **Aufgabe** zugrunde, einen Dichtstreifen der eingangs genannten Art dahingehend weiterzubilden, dass sich bei einer vergleichsweise einfachen Montage eine zuverlässige Befestigung der Endkappe erzielen lässt.

Zur **Lösung** dieser Aufgabe wird ein Dichtstreifen mit den Merkmalen gemäß Anspruch 1 vorgeschlagen.

Der erfindungsgemäße Dichtstreifen beruht auf der Erkenntnis, die Endkappe aus einer Abdeckplatte und einem Befestigungsteil zusammenzusetzen. Die zweckmäßigerweise an die Kontur der Zierleiste angepasste Abdeckplatte dient vornehmlich dazu, den Zwischenraum zwischen der Zierleiste und dem Trägerprofil abzudecken und damit einen formschönen Abschluss des Dichtstreifens zu bilden. Demgegenüber besteht die Funktion des Befestigungsteils darin, die Endkappe einfach zu montieren und zuverlässig zu befestigen. Zu diesem Zweck weist das Befestigungsteil eine Form auf, die zum einen ein einfaches Einführen des Befestigungsteils in den Zwischenraum und zum anderen ein form- und kraftschlüssiges Festlegen des Befestigungsteils durch Verrasten gewährleistet. Im Unterschied zur Befestigung von herkömmlichen Endkappen macht das Verrasten der Endkappe des erfindungsgemäßen Dichtstreifens einen zusätzlichen Stoffschluss entbehrlich, so dass bei einer zuverlässigen Befestigung eine verhältnismäßig einfache Montage sichergestellt ist. Darüber hinaus gewährleistet das Verrasten des Befestigungsteils eine präzise Ausrichtung der Endkappe in Bezug auf die Zierleiste. Ein das Erscheinungsbild beeinträchtigender Spalt zwischen der Endkappe und der Zierleiste lässt sich auf diese Weise vermeiden.

Vorteilhafte Ausgestaltungen des erfindungsgemäßen Dichtstreifens werden in den Ansprüchen 2 bis 13 definiert.

Bevorzugt weist die Abdeckplatte eine Innenseite und eine Außenseite auf. An der Innenseite ist vorzugsweise wenigstens ein Führungsstift angeordnet, der an der Innenfläche der Zierleiste anliegt und diese abstützt, um eine präzise Ausrichtung der Endkappe in Bezug auf die Zierleiste zu gewährleisten.

In diesem Zusammenhang hat es sich als vorteilhaft erwiesen, wenn die Zierleiste im Querschnitt annähernd C-förmig oder V-förmig ist. Denn auf diese Weise lässt sich ein Formschluss zwischen dem Führungsstift und der Zierleiste erreichen, der zu einem dichten Anliegen der Zierleiste an der Endkappe beiträgt.

In einer bevorzugten Ausführungsform des erfindungsgemäßen Dichtstreifens ist das Befestigungsteil im Querschnitt annähernd L-förmig und weist einen ersten Schenkel und einen zweiten Schenkel auf. Der erste Schenkel ist mit einem Rastarm versehen, der einen in eine Aussparung eingreifenden Vorsprung aufweist. Der an dem ersten Schenkel ausgebildete Rastarm hat die Funktion, das Befestigungsteil in dem Zwischenraum zu verrasten. Zu diesem Zweck greift der Vorsprung des Rastarms in die entweder an der Zierleiste oder an dem Trägerprofil ausgebildete Aussparung ein. Der sich im Wesentlichen senkrecht zu dem ersten Schenkel erstreckende zweite Schenkel dient vornehmlich dazu, das Befestigungsteil in den Zwischenraum zu führen und ein Widerlager für den Rastarm zu bilden.

Von besonderem Vorteil ist es, die Aussparung, in die der Vorsprung eingreift, in einem ersten Abstand von der Innenseite der Abdeckplatte und den Vorsprung in einem zweiten Abstand von der Innenseite der Abdeckplatte anzuordnen, wobei der erste Abstand größer als der zweite Abstand ist. Auf diese Weise lässt sich ein Kraftschluss zwischen dem Vorsprung und der Aussparung erreichen, der eine an dem Befestigungsteil angreifende Zugkraft hervorruft, welche die Endkappe an das Trägerprofil und die Zierleiste heranzieht und damit das Auftreten eines Spalts zwischen der Abdeckplatte und der Zierleiste verhindert.

Weiterhin ist es von Vorteil, den zweiten Schenkel mit wenigstens einem Vorsprung zu versehen, der in das Trägerprofil eingedrückt ist. Der Vorsprung dient dazu, Fertigungstoleranzen zu kompensieren und einen festen Sitz des Befestigungsteils in dem Zwischenraum zu erreichen. Die Kompensation von Fertigungstoleranzen kommt vor allem dann zum Tragen, wenn das Trägerprofil zur Bildung des Endabschnitts beschnitten wird, so dass der zweite Schenkel an einer Schnittfläche anliegt.

In einer weiteren bevorzugten Ausführungsform des erfindungsgemäßen Dichtstreifens ist an dem Trägerprofil ein Rastschuh angeordnet. Das Befestigungsteil ist in diesem Fall mit einer Vielzahl an Einkerbungen versehen und greift in den Rastschuh derart ein, dass die Einkerbungen des Befestigungsteils form- und kraftschlüssig mit dem Rastschuh verbunden sind. Die Einkerbungen sind zweckmäßigerweise in einem relativ geringen Abstand, zum Beispiel 0,5 mm, voneinander beabstandet, um eine möglichst hohe Zugkraft, die durch das Einrasten der Einkerbungen in den Rastschuh hervorgerufen wird, zu erzeugen.

Das Trägerprofil ist vorteilhafterweise mit einer Nut versehen, wobei der Rastschuh formschlüssig in der Nut angeordnet ist, so dass eine exakte Lage des Rastschuhs gewährleistet ist. Um den Rastschuh formschlüssig in der zweckmässigerweise durch Extrusion des Trägerprofils erzeugten und sich insofern in Längsrichtung des Trägerprofils erstreckenden Nut anzuordnen, kann die Nut mit einer Hinderschneidung versehen sein. Die Hinterschneidung gewährleistet einen Formschluss in einer Richtung senkrecht zur Längsrichtung des Trägerprofils. Um im Bedarfsfall auch einen Formschluss in Längsrichtung des Trägerprofils zu erreichen, kann die Nut in einem vorgegebenen Abstand von der Innenseite der Abdeckplatte mit einer Verbreiterung versehen sein, in welcher der Rastschuh angeordnet ist. Weist die beispielsweise durch Fräsen erzeugte Verbreiterung eine runde Form auf, ist es zudem von Vorteil, den Rastschuh mit einem Ansatzstück zu versehen, das in die Nut eingreift und damit eine verdrehsichere Anordnung des Rastschuhs in der Verbreiterung ermöglicht.

Die Zierleiste ist zweckmässigerweise aus Kunststoff oder Metall, vorzugsweise Aluminium, gefertigt. Vor allem die Fertigung der Zierleiste aus Aluminium bietet neben einer leichtgewichtigen Ausgestaltung den Vorteil einer in ästhetischer Hinsicht ansprechenden optischen Gestaltung.

Um eine einfache und kostengünstige Fertigung zu gewährleisten, ist das als Dichtung ausgestaltete Trägerprofil aus einem elastomeren Werkstoff gefertigt, vorzugsweise einem thermoplastischen Elastomer (TPE) oder Ethylen-Propylen-Dien-Kautschuk (EPDM) extrudiert. Die bevorzugte Fertigung der Dichtung durch Extrusion trägt der vor allem im Kraftfahrzeugbau anzutreffenden Massenproduktion Rechnung.

Einzelheiten und weitere Vorteile des erfindungsgemäßen Dichtstreifens ergeben sich aus der nachfolgenden Beschreibung zweier bevorzugter Ausführungsbeispiele. In den die Ausführungsbeispiele lediglich schematisch darstellenden Zeichnungen veranschaulichen im Einzelnen:
- Fig. 1: eine Seitenansicht eines Kraftfahrzeugs;
- Fig. 2: eine perspektivische Ansicht einer Endkappe in einer ersten Ausführungsform des erfindungsgemäßen Dichtstreifens;
- Fig. 3: einen Querschnitt durch eine Zierleiste;
- Fig. 4: einen Schnitt gemäss der Linie IV in Fig. 1;
- Fig. 5: einen Längsschnitt durch die Endkappe gemäß Fig. 2;
- Fig. 6: eine teilgeschnittene Seitenansicht einer Endkappe in einer zweiten Ausführungsform des erfindungsgemäßen Dichtstreifens;
- Fig. 7: einen Schnitt gemäß der Linie VII in Fig. 1 und
- Fig. 8: einen Querschnitt durch einen in eine Nut einzusetzenden Rastschuh.

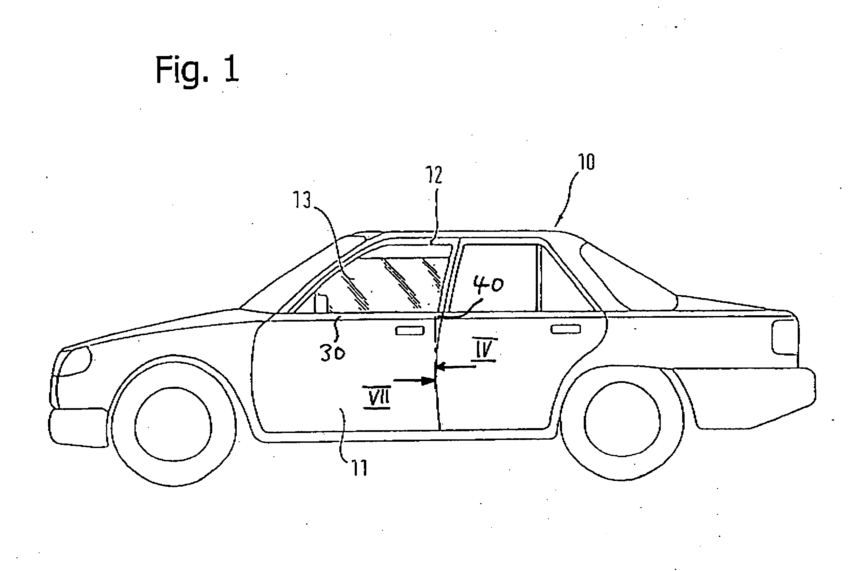

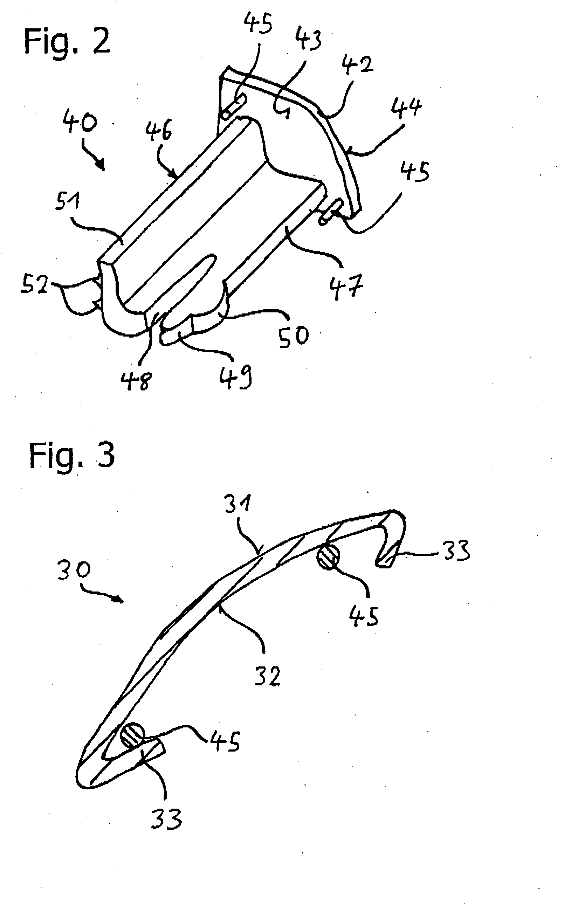

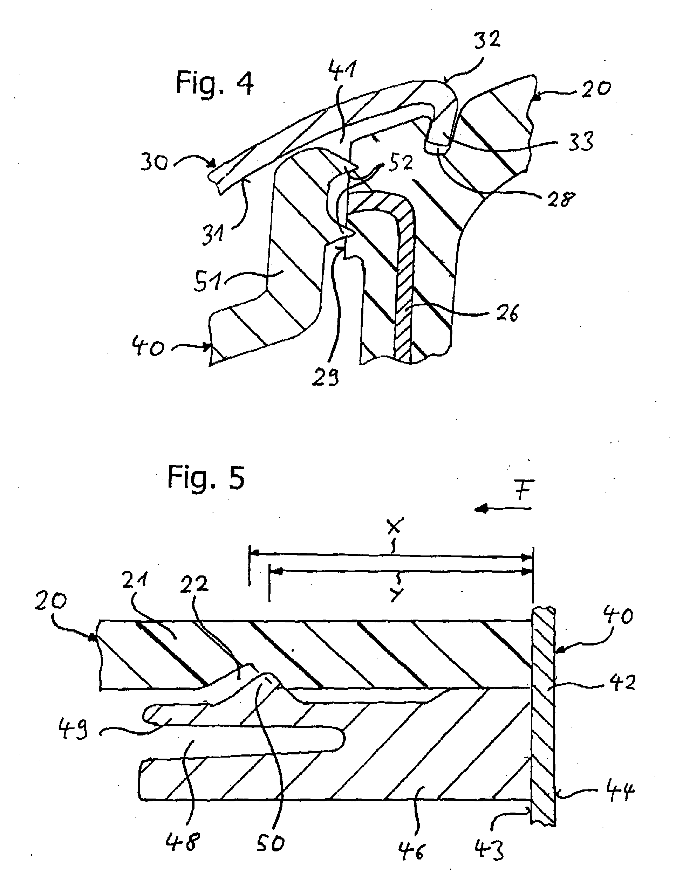

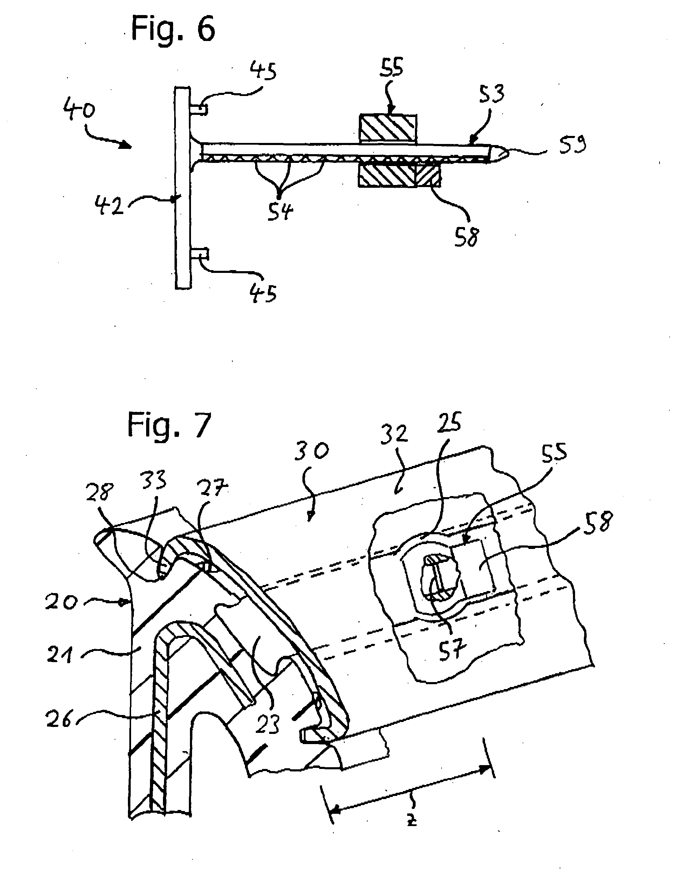

Das in Fig. 1 dargestellte Kraftfahrzeug 10 weist eine Tür 11 auf, die mit einem Rahmen 12 versehen ist. Der Rahmen 12 fasst eine durch einen Elektromotor angetriebene Fensterscheibe 13 ein, die sich in einen Fensterschacht der Tür 11 versenken lässt. Entlang des Rahmens 12 ist ein Dicht-und Zierstreifen angeordnet, der dazu dient, die Fensterscheibe 13 abzudichten und dem Rahmen 12 ein in ästhetischer Hinsicht ansprechendes Erscheinungsbild zu verleihen. Wie insbesondere die Fig. 4 und 7 zu erkennen geben, weist der Dichtstreifen im Bereich des Fensterschachts eine Dichtung 20 auf, die aus einem elastomeren Werkstoff, zum Beispiel EPDM, extrudiert ist und die Fensterscheibe 13 entlang der Öffnung des Fensterschachts abdichtet. An der ein Trägerprofil darstellenden Dichtung 20, die durch einen metallenen Träger 26 armiert wird, ist eine aus Metall, zum Beispiel Aluminium, gefertigte Zierleiste 30 befestigt. Die eine der Dichtung 20 zugewandte Innenfläche 31 und eine einem Betrachter zugewandte Außenfläche 32 aufweisende Zierleiste 30 ist im Querschnitt annähernd C-förmig, wie insbesondere aus Fig. 3 ersichtlich ist. Die Zierleiste 30 weist zwei hakenförmige Randabschnitte 33 auf, die form- und kraftschlüssig in Aussparungen 28 der Dichtung 20 eingreifen, wie die Fig. 4 und 7 zu erkennen geben. Um einen zuverlässigen Kraftschluss zwischen der Zierleiste 30 und der Dichtung 20 zu gewährleisten, weist die in Fig. 7 gezeigte Ausführungsform zusätzlich Stützlippen 27 auf, welche die Innenfläche 31 abstützten und eine Spannkraft zwischen der Zierleiste 30 und der Dichtung 20 erzeugen.

An einem Endabschnitt 21 der Dichtung 20 ist eine Endkappe 40 angeordnet, die einen zwischen der Dichtung 20 und der Innenfläche 31 vorhandenen Zwischenraum 41 abdeckt und einen formschönen Abschluss für den Dicht- oder Zierstreifen bildet. Die aus Kunststoff, beispielsweise durch Spritzgiessen, gefertigte Endkappe 40 setzt sich in einer ersten Ausführungsform aus einer den Zwischenraum 41 abdeckenden Abdeckplatte 42 und einem Befestigungsteil 46 zusammen.

Die an die Kontur der Zierleiste 30 angepasste Abdeckplatte 42 weist eine dem Zwischenraum 41 zugewandte Innenseite 43 und eine einem Betrachter zugewandte Aussenseite 44 auf. Das im Querschnitt annähernd L-förmige und einen ersten Schenkel 47 und einen zweiten Schenkel 51 aufweisende Befestigungsteil 46 ist an der Innenseite 43 angeordnet und erstreckt sich in den Zwischenraum 41. An der Innenseite 43 sind ausserdem Führungsstifte 45 angeordnet, die an der Innenfläche 31 der Zierleiste 30 anliegen und diese abstützen, wie in Fig. 3 zu erkennen ist.

Das Befestigungsteil 46 ist in dem Zwischenraum 41 verrastet. Zu diesem Zweck weist der erste Schenkel 47 einen durch eine Aussparung 48 gebildeten Rastarm 49 auf. Der Rastarm 49 ist mit einem Vorsprung 50 versehen, der in eine an der Dichtung 20 ausgebildete Aussparung 22 kraft- und formschlüssig eingreift, wie aus Fig. 5 ersichtlich ist. Fig. 5 gibt ferner zu erkennen, dass die Aussparung 22 in einem ersten Abstand x und der Vorsprung 50 in einem zweiten Abstand y von der Innenseite 43 der Abdeckplatte 42 angeordnet sind. Der erste Abstand x ist größer als der zweite Abstand y mit der Folge, dass sich beim Eingreifen des Vorsprungs 50 in die Aussparung 22 eine Zugkraft F ergibt, welche die Abdeckplatte 42 an die Dichtung 20 und damit an die Zierleiste 30 heranzieht. Auf diese Weise wird verhindert, dass zwischen der Abdeckplatte 42 und der Zierleiste 30 ein das optische Erscheinungsbild beeinträchtigender Spalt auftritt. Weiterhin ist der zweite Schenkel 51 mit Vorsprüngen 52 versehen, die, wie aus Fig. 4 ersichtlich ist, in eine Schnittfläche 29 der Dichtung 20 eingedrückt sind. Die Vorsprünge 52 dienen dazu, sich aufgrund der Schnittfläche 29 ergebende Fertigungstoleranzen zu kompensieren und einen festen Sitz des Befestigungsteils 46 in dem Zwischenraum 41 zu gewährleisten.

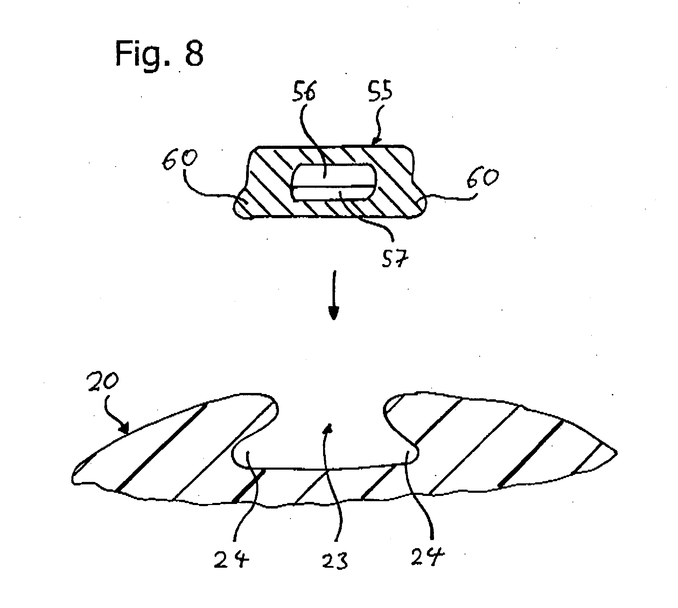

Bei der in den Fig. 6 bis 8 gezeigten zweiten Ausführungsform weist die Endkappe 40 ein Befestigungsteil 53 auf, das als längliches Schwert ausgestaltet und mit einer Vielzahl an Einkerbungen 54 versehen ist. Das Befestigungsteil 53 greift in einen Rastschuh 55 ein, der in einer Nut 23 der Dichtung 20 formschlüssig angeordnet ist. Wie insbesondere Fig. 8 zu erkennen gibt, ist die Nut 23 zu diesem Zweck mit Hinterschneidungen 24 versehen, die einen Formschluss in einer Richtung senkrecht zur Längsrichtung der Dichtung 20 bewirken. Der Rastschuh 55 weist hierfür eine Ausbauchung 60 auf, die in den Hinterschneidungen 24 zu liegen kommt. Ein Formschluss in Längsrichtung der Nut 23 ergibt sich dadurch, dass der Rastschuh 55 in einer Verbreiterung 25 angeordnet ist, die sich in einem vorgegebenen Abstand z von der Innenseite 43 der Abdeckplatte 42 befindet. Die Verbreiterung 25 ermöglicht eine einfache Montage und genaue Anordnung des Rastschuhs 55 in der Nut 23. Hierzu trägt auch bei, dass der Rastschuh 55 mit einem Ansatzstück 58 versehen ist, das sich ausserhalb der Verbreiterung 25 in der Nut 23 erstreckt, so dass der Rastschuh 55 verdrehsicher angeordnet ist.

Wie insbesondere aus Fig. 8 ersichtlich ist, weist der Rastschuh 55 eine Öffnung 56 auf, in die sich das Befestigungsteil 53 einführen lässt. Das Einführen des Befestigungsteils 53 wird durch einen spitzen Endabschnitt 59 des Befestigungsteils 53 erleichtert. Die Fig. 7 und 8 geben zu erkennen, dass im Bereich der Öffnung 56 eine Rastkante 57 angeordnet ist, an der die Einkerbungen 54 einrasten, um das Befestigungsteil 53 form- und kraftschlüssig an dem Rastschuh 55 zu befestigen.

Die zuvor beschriebenen Ausführungsformen haben gemein, dass sich die Endkappe 40 vergleichsweise einfach montieren und zuverlässig an dem Endabschnitt 21 befestigen lässt. Dies ist vor allem darauf zurückzuführen, dass das Befestigungsteil 46, 53 in den Zwischenraum 41 eingeführt und in diesem verrastet wird. Für die Verrastung des Befestigungsteils 46 greift der Vorsprung 50 des Rastarms 49 in die Aussparung 22 der Dichtung 20 ein. Die Verrastung des Befestigungsteils 53 hingegen ergibt sich durch das Zusammenwirken des Rastschuhs 55 mit den Einkerbungen 54. Diese Befestigung der Endkappe 40 trägt nicht zuletzt zu einem in ästhetischer Hinsicht ansprechenden Erscheinungsbild bei, indem das Auftreten eines die optische Gestaltung beeinträchtigenden Spalts zwischen der Abdeckplatte 42 und der Zierleiste 30 wirksam verhindert wird.

### Bezugszeichenliste

- 10: Kraftfahrzeug
- 11: Tür
- 12: Rahmen
- 13: Fensterscheibe

- 20: Dichtung
- 21: Endabschnitt
- 22: Aussparung
- 23: Nut
- 24: Hinterschneidung
- 25: Verbreiterung
- 26: Träger
- 27: Stützlippe
- 28: Aussparung
- 29: Schnittfläche

- 30: Zierleiste
- 31: Innenfläche
- 32: Aussenfläche
- 33: Randabschnitt

- 40: Endkappe
- 41: Zwischenraum
- 42: Abdeckplatte
- 43: Innenseite
- 44: Aussenseite
- 45: Führungsstift
- 46: Befestigungsteil
- 47: erster Schenkel

- 48: Aussparung
- 49: Rastarm
- 50: Vorsprung
- 51: zweiter Schenkel
- 52: Vorsprung
- 53: Befestigungsteil
- 54: Einkerbung
- 55: Rastschuh
- 56: Öffnung
- 57: Rastkante
- 58: Ansatzstück
- 59: spitzer Endabschnitt
- 60: Ausbauchung

- F: Zugkraft
- x: Abstand
- y: Abstand
- z: Abstand

## Patentansprüche

1. Dichtstreifen für Kraftfahrzeuge (10) mit
einem Trägerprofil (20), das aus einem elastomeren Werkstoff gefertigt ist und einen Endabschnitt (21) aufweist;
einer Zierleiste (30), die an dem Trägerprofil (20) befestigt ist und eine Innenfläche (31) und eine Außenfläche (32) aufweist, und
einer Endkappe (40), die an dem Endabschnitt (21) angeordnet ist und einen zwischen dem Trägerprofil (20) und der Innenfläche (31) vorhandenen Zwischenraum (41) abdeckt; **dadurch gekennzeichnet, daß**
die Endkappe (40) eine Abdeckplatte (42), die den Zwischenraum (41) abdeckt, und ein Befestigungsteil (46, 53), das sich in den Zwischenraum (41) erstreckt, aufweist und
wobei das Befestigungsteil (46, 53) in dem Zwischenraum (41) verrastet ist.

2. Dichtstreifen nach Anspruch 1, **dadurch gekennzeichnet, dass** die Abdeckplatte (42) eine Innenseite (43) und eine Außenseite (44) aufweist, wobei vorzugsweise an der Innenseite (43) wenigstens ein Führungsstift (45) angeordnet ist, der die Innenfläche (31) der Zierleiste (30) abstützt.

3. Dichtstreifen nach Anspruch 1 oder 2, **dadurch gekennzeichnet, dass** die Zierleiste (30) im Querschnitt annährend C-förmig oder V-förmig ist.

4. Dichtstreifen nach einem der Ansprüche 1 bis 3, **dadurch gekennzeichnet, dass** das Befestigungsteil (46) im Querschnitt annährend L-förmig ist und einen ersten Schenkel (47) und einen zweiten Schenkel (51) aufweist, wobei der erste Schenkel (47) mit einem Rastarm (49) versehen ist, der einen in eine Aussparung (22) eingreifenden Vorsprung (50) aufweist.

5. Dichtstreifen nach Anspruch 4, **dadurch gekennzeichnet, dass** die Aussparung (22) in einem ersten Abstand (x) von der Innenseite (43) der Abdeckplatte (42) und der Vorsprung (50) in einem zweiten Abstand (y) von der Innenseite (43) der Abdeckplatte (42) angeordnet ist, wobei der erste Abstand (x) größer als der zweite Abstand (y) ist.

6. Dichtstreifen nach Anspruch 4 oder 5, **dadurch gekennzeichnet, dass** der zweite Schenkel (51) mit wenigstens einem Vorsprung (52) versehen ist, der in das Trägerprofil (20) eingedrückt ist.

7. Dichtstreifen nach einem der Ansprüche 1 bis 3, **dadurch gekennzeichnet, dass** an dem Trägerprofil (20) ein Rastschuh (55) angeordnet ist, wobei das Befestigungsteil (53) mit einer Vielzahl an Einkerbungen (54) versehen ist und in den Rastschuh (55) eingreift.

8. Dichtstreifen nach Anspruch 7, **dadurch gekennzeichnet, dass** das Trägerprofil (20) mit einer Nut (23) versehen ist, wobei der Rastschuh (55) formschlüssig in der Nut (23) angeordnet ist.

9. Dichtstreifen nach Anspruch 8, **dadurch gekennzeichnet, dass** die Nut (23) mit einer Hinterscheidung (24) versehen ist.

10. Dichtstreifen nach Anspruch 8 oder 9, **dadurch gekennzeichnet, dass** die Nut (23) in einem vorgegebenen Abstand (z) von der Innenseite (43) der Abdeckplatte (42) mit einer Verbreiterung (25) versehen ist, in welcher der Rastschuh (55) angeordnet ist.

11. Dichtstreifen nach Anspruch 10, **dadurch gekennzeichnet, dass** der Rastschuh (55) mit einem Ansatzstück (58) versehen ist.

12. Dichtstreifen nach einem der Ansprüche 1 bis 11, **dadurch gekennzeichnet, dass** die Zierleiste (30) aus Kunststoff oder Metall, vorzugsweise Aluminium, gefertigt ist.

13. Dichtstreifen nach einem der Ansprüche 1 bis 12, **dadurch gekennzeichnet, dass** das Trägerprofil als Dichtung (20) ausgestaltet ist, die durch Extrusion gefertigt ist.

## Claims

1. Sealing strip for motor vehicles (10) having
a reinforced profile (20) made of an elastomer material and having an end section (21);
a trim strip (30) attached to the reinforced profile (20) having an inner surface (31) and an outer surface (32) and
an end cap (40) located at the end section (21) which covers the intermediate space (41) existing between the reinforced profile (20) and the inner surface (31); **characterised in that**
the end cap (40) consists of a cover plate (42) which covers the intermediate space (41) and a fastening part (46, 53) which extends into the intermediate space (41)
wherein the fastening part (46, 53) locks into the intermediate space (41).

2. Sealing strip according to Claim 1 **characterised in that** the cover plate (42) has an inner surface (43) and an outer surface (44) wherein preferably at least one guide peg (45) which supports the inner surface (31) of the trim strip (30) is arranged on the inner surface (43).

3. Sealing strip according to Claim 1 or 2 **characterised in that** the trim strip (30) has an approximately C-shaped or V-shaped cross-section.

4. Sealing strip according to one of the Claims 1 to 3 **characterised in that** the fastening part (46) has an approximately L-shaped cross-section and comprises a first leg (47) and a second leg (51) wherein the first leg (47) is provided with a locking arm (49) with a protrusion (50) that engages in a recess (22).

5. Sealing strip according to Claim 4 **characterised in that** the recess (22) is arranged at a first distance (x) from the inner side (43) of the covering plate (42) and the protrusion (50) is arranged at a second distance (y) from the inner side (43) of the cover plate (42) wherein the first distance (x) is greater than the second distance (y).

6. Sealing strip according to Claim 4 or 5 **characterised in that** the second leg (51) is provided with at least one protrusion (52) that is pressed into the reinforced profile (20).

7. Sealing strip according to one of the claims 1 to 3 **characterised in that** a locking carriage (55) is arranged on the reinforced profile (20)
wherein the fastening part (53) is provided with a number of notches (54) and engages into the locking carriage (55).

8. Sealing strip according to Claim 7 **characterised in that** the reinforced profile (20) is provided with a channel (23) wherein the locking carriage (55) is arranged to fit positively into the channel (23).

9. Sealing strip according to Claim 8 **characterised in that** the channel (23) has an undercut (24).

10. Sealing strip according to Claim 8 or 9 **characterised in that** the channel (23) is provided with a broadening (25) at a prescribed distance (z) from the inner side (43) of the cover plate (42) into which the locking carriage (55) is located.

11. Sealing strip according to Claim 10 **characterised in that** the locking carriage (55) is provided with an attachment piece (58).

12. Sealing strip according to one of the claims 1 to 11 **characterised in that** the trim strip (30) is manufactured of plastic or metal, preferably of aluminium.

13. Sealing strip according to one of the claims 1 to 12 **characterised in that** the reinforced profile is configured as a seal (20) which is made by extrusion.

## Revendications

1. Bande d'étanchéité pour véhicule automobile (10) comprenant
un profilé porteur (20), qui est réalisé en matériau élastomère et qui présente un tronçon terminal (21) ;
une bande décorative (30), qui est fixée au profilé porteur (20) et qui présente une face intérieure (31) et une face extérieure (32), et
un capuchon terminal (40), qui est agencé sur le tronçon terminal (21) et qui recouvre un intervalle (41) présent entre le profilé porteur (20) et la face intérieure (31) ;
**caractérisée en ce que**
e capuchon terminal (40) comprend une plaque de recouvrement (42), qui recouvre l'intervalle (41), et une pièce de fixation (46, 53) qui s'étend dans l'intervalle (41), et
dans laquelle la pièce de fixation (46, 53) est enclenché dans l'intervalle (41).

2. Bande d'étanchéité selon la revendication 1, **caractérisée en ce que** la plaque de recouvrement (42) présente une face intérieure (43) et une face extérieure (44) de préférence, au moins une tige de guidage (45) étant agencée sur la face intérieure (43), qui soutient la face intérieure (31) de la bande décorative (30).

3. Bande d'étanchéité selon la revendication 1 ou 2, **caractérisée en ce que** la bande décorative (30) présente en section transversale approximativement une forme en C ou une forme en V.

4. Bande d'étanchéité selon l'une des revendications 1 a 3, **caractérisée en ce que** la pièce de fixation (46) présente en section transversale approximativement une forme en L, et comprend une première branche (47) et une seconde branche (51), ladite première branche (47) étant pourvue d'un bras d'enclenchement (49) qui présente une saillie (50) qui s'engage dans une échancrure (22).

5. Bande d'étanchéité selon la revendication 4, **caractérisée en ce que** l'échancrure (22) est agencée à une première distance (x) depuis la face intérieure (43) de la plaque de recouvrement (42) et la saillie (50) est agencée à une seconde distance (y) depuis la face intérieure (43) de la plaque de recouvrement (42), ladite première distance (x) étant supérieure à la seconde distance (y).

6. Bande d'étanchéité selon la revendication 4 ou 5, **caractérisée en ce que** la seconde branche (51) est pourvu d'au moins une saillie (52) qui est enfoncée dans le profilé porteur (20).

7. Bande d'étanchéité selon l'une des revendications 1 à 3, **caractérisée en ce qu'**un sabot d'enclenchement (55) est agencé sur le profilé porteur (20), la pièce de fixation (53) étant pourvue d'une pluralité d'encoches (54), et s'engageant dans le sabot d'enclenchement (55).

8. Bande d'étanchéité selon la revendication 7, **caractérisée en ce que** le profilé porteur (20) est pourvu d'une gorge (23), ledit sabot d'enclenchement (55) étant agencé dans la gorge (23) avec coopération de formes.

9. Bande d'étanchéité selon la revendication 8, **caractérisée en ce que** la gorge (23) est pourvue d'une contre-dépouille (24).

10. Bande d'étanchéité selon la revendication 8 ou 9, **caractérisée en ce que** la gorge (23) est pourvue d'un élargissement (25), dans lequel est agencé le sabot d'enclenchement (55), à une distance prédéterminée de la face intérieure (43) de la plaque de recouvrement (42).

11. Bande d'étanchéité selon la revendication 10, **caractérisée en ce que** le sabot d'enclenchement (55) est pourvu d'une pièce formant un talon (58).

12. Bande d'étanchéité selon l'une des revendications 1 à 11, **caractérisée en ce que** la bande décorative (30) est réalisée en matière plastique ou en métal, de préférence en aluminium.

13. Bande d'étanchéité selon l'une des revendications 1 à 12, **caractérisé en ce que** le profilé porteur est conçu sous la forme d'un joint (20), lequel est réalisé par extrusion.
